# EUROPEAN PATENT APPLICATION

(11) **EP 2 117 171 A1**
(43) Date of publication of application: **11.11.2009**
(21) Application number: 08014794.5
(22) Date of filing: 20.08.2008
(51) Int. Cl.: H04L 12/28, H04L 29/06

(54) **Audio/Video streaming signal provision method and sharing system**

(30) Priority: 09.05.2008 TW 97117257
(71) Applicant: Avermedia Technologies, Inc., Taipei (TW)
(72) Inventor: Yang, Jui-Hsiang, Chung Ho Taipei 235 (TW); Chang, Chiao-Yung, Chung Ho Taipei 235 (TW); Jung, Jiun-Kuei, Chung Ho Taipei 235 (TW); Hu, Jhao-Dong, Chung Ho Taipei 235 (TW); Su, Hung-Shen, Chung Ho Taipei 235 (TW); Wu, Tung-Lung, Chung Ho Taipei 235 (TW); Hu, Yi-Qiang, Chung Ho Taipei 235 (TW)
(74) Representative: Winkler, Andreas Fritz Ernst

(57) **Abstract**

An audio/video streaming signal provision method and an audio/video streaming signal sharing system for use with Internet. The sharing system includes a service management server (20), multiple sharers (22, 23, 24) and at least a user (21). The audio/video streaming signal provision method includes the following steps. The user (21) communicates with the service management server (20) through Internet (2). The service management server (20) generates a sharer set comprising at least the sharer according to an identification data of the user (21). The user (21) issues a request to the sharer (22, 23, 24) through the service management server (20). The sharer (22, 23, 24) transmits an audio/video streaming signal to the user (21) through Internet (2) in response to the request.

## Description

### FIELD OF THE INVENTION

The present invention relates to an audio/video streaming signal provision method and an audio/video streaming signal sharing system, and more particularly to an audio/video streaming signal provision method and an audio/video streaming signal sharing system for use with Internet.

### BACKGROUND OF THE INVENTION

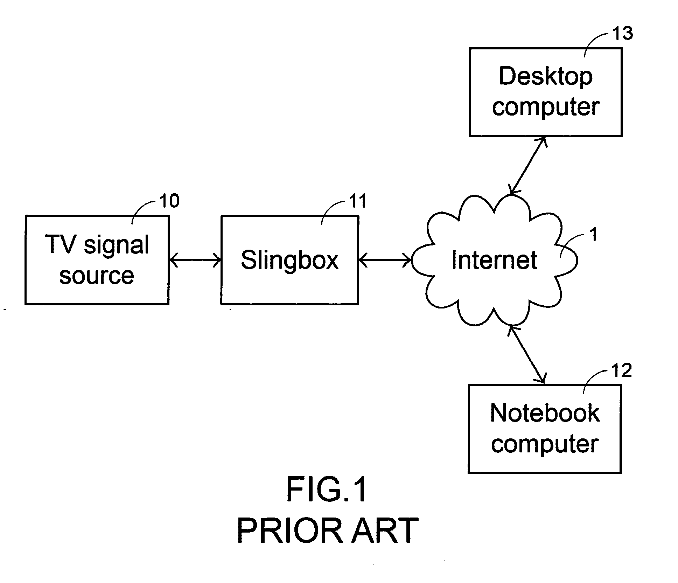

With rapid expansion of network bandwidth and universality of Internet infrastructure, the use of Internet to transmit audio/video streaming signal or even TV programs is now gaining in popularity. For example, Slingbox is a TV streaming device that enables users to remotely view their TV programs from Internet-enabled computers. FIG. 1 is a schematic functional block diagram of a conventional audio/video streaming signal sharing system. The conventional audio/video streaming signal sharing system has a Slingbox 11, which is interconnected between a TV signal source 10 and Internet 1. By the Slingbox 11, the TV signals from the TV signal source 10 are converted into network audio/video streaming signals. The network audio/video streaming signals can be transmitted to any computer that is communicated with Internet 1. For example, after the Slingbox 11 is communicated with Internet 1, the Slingbox 11 can redirect the TV signals to a notebook computer 12 or a desktop computer 13, which is running SlingPlayer software. In other words, the TV signals can be transmitted from the Slingbox 11 to the viewers' computer located anywhere in the world through Internet connection. Furthermore, the viewer can remotely control the TV signal source 10 connected to the Slingbox 11 by the Internet-enabled computer. An example of the TV signal source 10 includes but is not limited to a cable box, a satellite receiver or a digital video recorder.

The conventional audio/video streaming signal sharing system, however, still has some drawbacks. For example, for a purpose of connecting the Slingbox 11 to Internet 1, the far-end user should firstly realize the IP address of the Slingbox 11 or set up a user account. The user having an authenticated password can access the Slingbox 11 to receive the network audio/video streaming signals as described above. In addition, only one computer can access the Slingbox 11 at a time. Under this circumstance, the conventional audio/video streaming signal sharing system is not an effective way for sharing resources.

Therefore, there is a need of providing an improved audio/video streaming signal provision method and an improved audio/video streaming signal sharing system to obviate the drawbacks encountered from the prior art.

### SUMMARY OF THE INVENTION

The present invention provides an audio/video streaming signal provision method for use with a service management server, a user and a sharer, which are connected to Internet. The audio/video streaming signal provision method includes the following steps. The user communicates with the service management server through Internet. The service management server generates a sharer set comprising at least the sharer according to an identification data of the user. The user issues a request to the sharer through the service management server. The sharer transmits an audio/video streaming signal to the user through Internet in response to the request.

The present invention also provides an audio/video streaming signal sharing system for use with Internet. The audio/video streaming signal sharing system includes a service management server, at least a sharer and at least a user. The service management server is communicated with Internet, and has a database. The sharer is communicated with Internet and the service management server for issuing an audio/video streaming signal. The user is communicated with Internet and connected to the service management server through Internet. A sharer set comprising at least the sharer and corresponding to the user is generated according to an identification data of the user. The user issues a request to the sharer through the service management server. The sharer transmits the audio/video streaming signal to the user through Internet in response to the request.

The present invention also provides an audio/video streaming signal provision method for use with a service management server, at least a user and multiple sharers, which are connected to Internet. The audio/video streaming signal provision method includes the following steps. The user communicates with the service management server through Internet. The service management server generates a sharer set comprising the sharers according to an identification data of the user, and transmits the sharer set to the user such that the contents and the connecting statues contained in the sharer set are shown and distinguishable. The user issues a request to an on-line sharer contained in the sharer set through the service management server. The on-line sharer transmits an audio/video streaming signal to the user through Internet in response to the request.

The present invention also provides an audio/video streaming signal sharing system for use with Internet. The audio/video streaming signal sharing system includes a service management server, multiple sharers and at least a user. The service management server is communicated with Internet, and has a database. The sharers are communicated with Internet and the service management server for issuing respective audio/video streaming signals. The user is communicated with Internet and connecting to the service management server through Internet. A sharer set comprising the sharers and corresponding to the user is generated according to an identification data of the user. The sharer set is transmitted to the user such that the contents and the connecting statues contained in the sharer set are shown and distinguishable. The user issues a request to an on-line sharer contained in the sharer set through the service management server. The on-line sharer transmitting the audio/video streaming signal to the user through Internet in response to the request.

In an embodiment, the service management server has a database storing therein the identification data of the user and the sharer set, such that the service management server generates the sharer set according to the identification data of the user.

In an embodiment, the user is a first personal computer having user software installed therein, the sharer is a second personal computer having sharer software installed therein, and the second personal computer has a function of retrieving a TV signal and converting the TV signal into the audio/video streaming signal.

In an embodiment, the sharer contained in the sharer set is authorized by steps of creating a dialog frame by the user software, the service management server and the sharer software, issuing a request from the user to the sharer for obtaining authorization via the dialog frame, and containing the sharer contained in the sharer set with the sharer' approval.

In an embodiment, the contents and the connecting statues contained in the sharer set are shown after the user is communicating with the service management server through Internet, and the name of the on-line sharer is highlighted or indicated as bold characters for emphasis.

In an embodiment, a transmission path between the user and the sharer is established through Internet connection in response to the request, so that the audio/video streaming signal is transmitted from the sharer to the user along the transmission path.

In an embodiment, the contents of the audio/video streaming signal shared by the sharer are adjustable by the user with approval of the sharer.

In an embodiment, if the user issues the request to the sharer through the service management server, the service management server notifies the sharer of the user's network address such that the user is deemed as a valid user and the transmission path is established. Otherwise, if no request is issued to the sharer through the service management server, the user is deemed as an invalid user and the request is rejected.

In an embodiment, the advertising information rent or bought by the sponsors is played on the homepage of the service management server, or the service management server irregularly transmits updated advertising information to the sharer such that the advertising information rent or bought by the sponsors is packed in the audio/video streaming signal to be inserted or placed on a corner of a display frame.

In an embodiment, the user is accessible to login into the service management server if the user has paid management fees.

In an embodiment, the service management server further sets up a user account number belonging to a user and a sharer, accumulates a first duration when the user account number shares programming, and exchanges the first duration with a second duration such that the user account number is accessible to view programming from other sharers within the second duration by the service management server.

In an embodiment, the contents contained in the sharer set include the account name of the sharer.

In an embodiment, at least an audio/video server's name, an audio/video source's name or a channel's name is attached to the account name.

### BRIEF DESCRIPTION OF THE DRAWINGS

The above contents of the present invention will become more readily apparent to those ordinarily skilled in the art after reviewing the following detailed description and accompanying drawings, in which:

FIG. 1 is a schematic functional block diagram of a conventional audio/video streaming signal sharing system;

FIG. 2A is a schematic block illustrating an audio/video streaming signal sharing system according to a preferred embodiment of the present invention;

FIG. 2B schematically illustrates a web page showing a sharer set corresponding to the user after the successfully logins into the service management server;

FIG. 3 is a flowchart of an audio/video streaming signal provision method according to the present invention;

FIGS. 4A and 4B schematically illustrates a flowchart of another audio/video streaming signal provision method according to the present invention; and

FIG. 5 schematically illustrates a web page showing another sharer set corresponding to the user after the successfully logins into the service management server.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

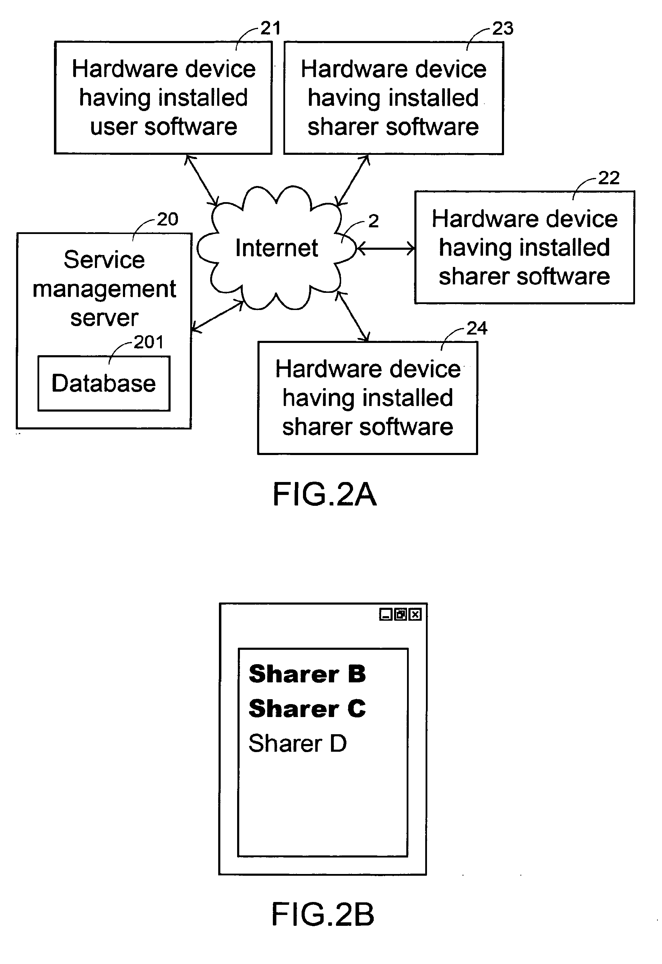

For obviating the drawbacks encountered from the prior art, an audio/video streaming signal sharing system according to a preferred embodiment of the present invention will be illustrated with reference to FIG. 2A. The audio/video streaming signal sharing system comprises a service management server 20, the Internet 2, a user hardware device 21 and a plurality of sharer hardware devices 22, 23 and 24. The service management server 20 is connected to Internet 2. Through Internet connection, the user hardware device 21 can download user software from the service management server 20 so as to install the user software in the user hardware device 21. Likewise, through Internet connection, the sharer hardware devices 22, 23 and 24 can download sharer software from the service management server 20 so as to install the sharer software in the sharer hardware devices 22, 23 and 24. After the user hardware device 21 containing the installed user software and the sharer hardware devices 22, 23 and 24 containing the sharer software are connected to Internet 2 and registered through Internet connection, the service management server 20 may acquire the identification data of the user and the sharers. In addition, the service management server 20 has a database 201 for storing these identification data therein. According to the identification data, the service management server 20 can discriminate whether the hardware devices are accessible to login into the service management server 20. In other words, any hardware device with the user software and/or the sharer software is accessible to login into the service management server 20 if the identification data is authenticated.

For example, the hardware devices used in the sharing system of FIG. 2A are personal computers having the installed user software and/or sharer software. After the personal computer containing the installed user software is connected to Internet 2 and registered through Internet connection, the user's identification data (e.g. the username and the password) is stored in the database 201 of the service management server 20. On the other hand, after the personal computers containing the installed sharer software (e.g. the sharer hardware devices 22, 23 and 24 as shown in FIG. 2A) are connected to Internet 2 and registered through Internet connection, the sharers' identification data (e.g. the usernames and the passwords) and the contents of the sharable data (e.g. the TV channel name, the country, the region and the like) are also stored in the database 201 of the service management server 20. Moreover, the personal computers containing the installed sharer software have the functions of retrieving TV signals, converting the TV signals into audio/video streaming signals, and sending out the audio/video streaming signals through Internet connection. In a case that the user software and the sharer software are both installed in a personal computer, a common identification data (e.g. the username and the password) is necessary for the personal computer to login into the service management server 20. Under this circumstance, this personal computer is not only a user for providing TV programs to others but also a sharer for viewing TV programs shared by others.

Moreover, after the personal computer containing the installed user software (e.g. the user hardware device 21 as shown in FIG. 2A) logins into the service management server 20, the user may select desired sharers from the sharers' identification data and the contents of the sharable data stored in the database 201 of the service management server 20, thereby tabulating the selected sharers. Under authorization of the selected sharers, a sharer set corresponding to the user hardware device 21 is generated.

Hereinafter, the operations of the audio/video streaming signal sharing system of the present invention are illustrated with reference to FIGS. 2A and 2B. First of all, a user A logins into the service management server 20 by inputting the username and the authenticated password. Next, a key word "golf" is inputted into a web page provided by the service management server 20. As a consequence, the account numbers of all sharers whose sharable data contain the content of "golf" are searched. Meanwhile, the user may select one or more sharers and chat with the selected sharers via a dialog frame, which is created by the user software, the service management server 20 and the sharer software. Via the dialog frame, the user A may issue a request to the selected sharers in order to obtain authorization. With the selected sharers' approval, the selected sharers obtain authorization and thus the selected sharers are contained in the sharer set corresponding to the user A. From now on, when the user A logins into the service management server 20, the user A can view the contents and the connecting statues contained in the sharer set on the web page. In addition, the names of the on-line sharers may be highlighted or indicated as bold characters in order for emphasis. Please refer to FIG. 2B. After the user A successfully logins into the service management server 20, the sharer set corresponding to the user A is shown on the web page. Thus sharer set includes the account numbers of the sharer B, the sharer C and the sharer D, in which the sharer B and the sharer C are on-line sharers and indicated as bold characters. Since the sharer D is an off-line sharer and not indicated as bold characters, the off-line sharer is very distinguished from the on-line sharers.

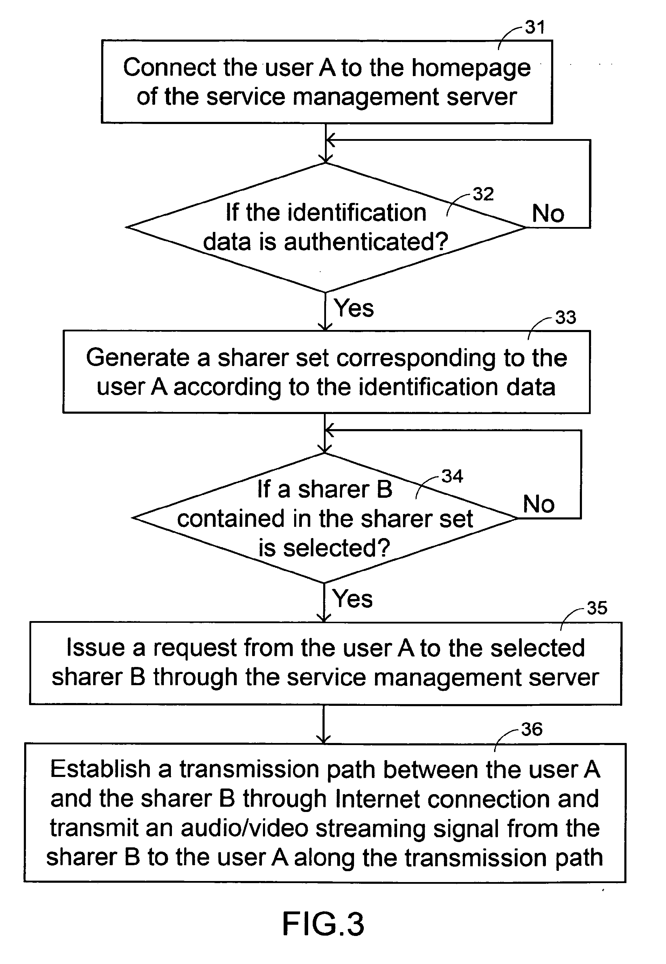

FIG. 3 is a flowchart of an audio/video streaming signal provision method according to the present invention for facilitating the user to view the audio/video streaming signal shared by the shares in the world. First of all, the user A is connected to the homepage of the service management server through Internet connection (Step 31). Next, the identification data of the user A is inputted for registry. If the identification data is authenticated (Step 32), the service management server 20 generates a sharer set corresponding to the user A (Step 33). Meanwhile, the user A may select a desired TV program shared by one sharer of the sharer set according to the contents of the sharable data and the connecting statues contained in the sharer set. If a sharer B contained in the sharer set is selected by for example double-clicking the sharer B on the web page (Step 34), the user A issues a request to the selected sharer B through the service management server (Step 35). In response to the request, a transmission path between the user A and the sharer B is established through Internet connection. Along the transmission path, an audio/video streaming signal is transmitted from the sharer B to the user A without the need of passing through the service management server (Step 36). Alternatively, with approval of the sharer B, the tuner at the side of the sharer B may be open to the user A and adjusted by the user A such that the contents of the sharable data (e.g. the channels of the TV programs) are tunable.

From the above description, it is found that a sharing system is established between the user and the sharers with management and mediation of the service management server 20. By the sharing system, the TV signals in some specified regions can be transmitted to viewers' computers located anywhere in the world through Internet connection. Furthermore, the viewer may be acted as a sharer to share TV programs with others.

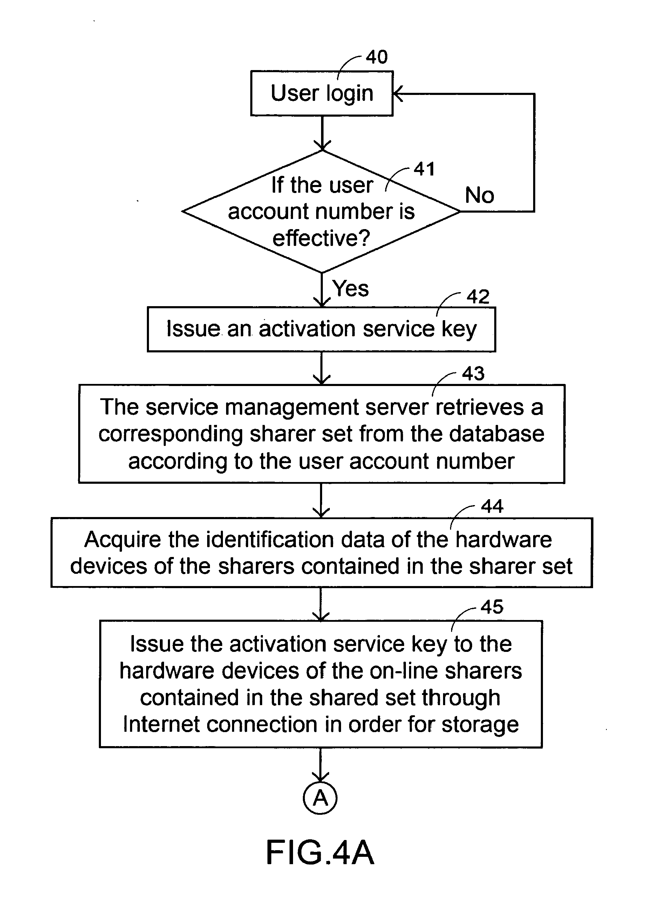

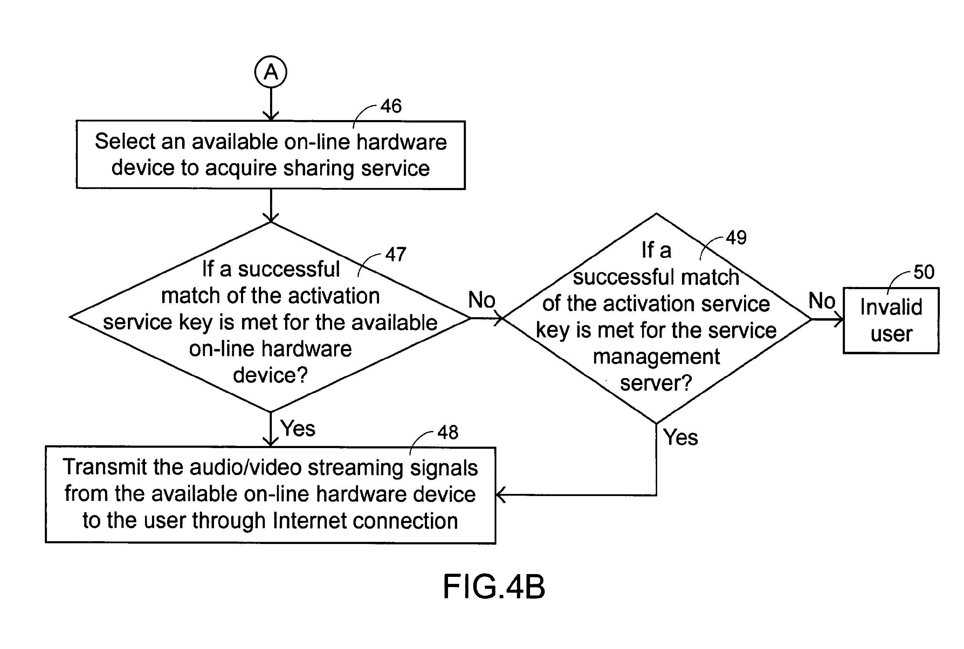

For enhancing management and mediation of the service management server, a flowchart of another audio/video streaming signal provision method according to the present invention will be illustrated with reference to FIGS. 4A and 4B.

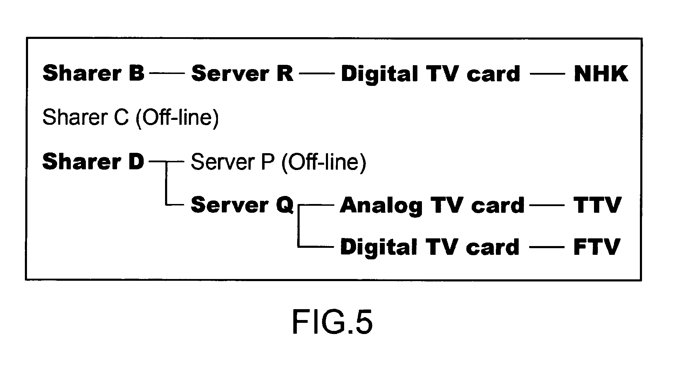

In this embodiment, the service management server is responsible for controlling data access of the sharing system. That is, the user is accessible to the service management server to search or view TV programs if the user has paid management fees. In addition, the sharer who has shared TV programs may get extra bonus points. In other words, if a user account number belongs to a user also acting as a sharer, the accumulated bonus points of acting as the sharer may be paid to exchange for the right to search or view TV programs from other sharers. For example, the service management server may accumulate a first duration of sharing TV programs from this user account number, and then exchange the first duration with a second duration such that the user account number is accessible to view programming from other sharers within the second duration by the service management server. In such manner, the sharers are willing to share their TV programs. Please refer to FIGS. 4A and 4B. After the user is accessible to login into the service management server (Step 40), the service management server will check whether the user account number is still effective (Step 41). If the user account number is still effective, the user has a right to login into the service management server to search or view TV programs. Therefore, the service management server issues an activation service key (e.g. a random password) to the user (Step 42). According to the user account number, the service management server retrieves a corresponding sharer set from the database (Step 43). Next, the service management server acquires the identification data of the hardware devices of the sharers contained in the sharer set (Step 44). Meanwhile, the service management server may realize the connecting statues of all sharers contained in the sharer set and the contents of the sharable data, and thus a display frame is shown on the user's screen as shown in FIG. 5. In addition to the account names of the sharers, the names of the audio/video servers attached to the account names (for example the server R attached to the sharer B or the servers P and Q attached to the sharer C), the audio/video sources (for example a digital TV card or an analog TV card), the connecting statuses of the audio/video servers (for example on-line or off-line statuses) and/or the channel's name (for example NHK, TTV, FTV) are also shown on the display frame. Through Internet connection, the activation service key is then issued to the hardware devices of the on-line sharers contained in the shared set for storage (Step 45). Meanwhile, the user may select one of the hardware devices of the on-line sharers that are available to acquire sharing service (Step 46). Next, the user exhibits the activation service key to the available on-line hardware device to perform a matching operation. If a successful match of the activation service key is met for the available on-line hardware device (Step 47), the available on-line hardware device will transmit audio/video streaming signals to the user through Internet connection (Step 48). Whereas, if an unsuccessful match of the activation service key is met for the available on-line hardware device, it is meant that the activation service key has not be received by the available on-line hardware device. Meanwhile, the activation service key is sent to the service management server to perform a matching operation. If a successful match of the activation service key is met for the service management server (Step 49), the service management server will notify the available on-line hardware device of transmitting audio/video streaming signals to the user through Internet connection (Step 48). Whereas, if an unsuccessful match of the activation service key is met for the service management server, the available on-line hardware device is deemed as an invalid user (Step 50).

In addition to the use of the activation service key, the audio/video streaming signal sharing system of the present invention may be managed by the following method. For example, when the user A issues a request to the selected sharer B through the service management server, the service management server will notify the sharer B of the network address of the user A (e.g. IP address or MAC address) such that the user A is deemed as a valid user for the sharer B and the transmission path is established. On the other hand, if no request is issued from the user A to the selected sharer B through the service management server, the user A is deemed as an invalid user for the sharer software of the sharer B.

In some embodiments, the advertising information rent or bought by the sponsors may be played on the homepage of the service management server 20. In some embodiments, the service management server 20 may irregularly transmit updated advertising information to the personal computers having installed sharer software. Consequently, the advertising information rent or bought by the sponsors may be packed in the audio/video streaming signal and thus inserted or placed on a corner of the display frame, so that the advertising information may be viewed by the user side.

From the above description, the audio/video streaming signal provision method and the audio/video streaming signal sharing system of the present invention is capable of obviating the drawbacks encountered from the prior art. The sharer software and the user software used in the present invention may be collectively sold along with the TV cards or TV boxes. Alternatively, the sharer software and the user software may be individually sold. The above embodiments are illustrated by referring to personal computers having installed sharer software or user software. Nevertheless, the present invention can be applied to any personal digital assistants (PDAs) or smart phones having installed sharer software or user software.

While the invention has been described in terms of what is presently considered to be the most practical and preferred embodiments, it is to be understood that the invention needs not to be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realizing the invention in diverse forms thereof.

## Claims

1. An audio/video streaming signal provision method for use with a service management server (20), a user (21) and a sharer (22, 23, 24), which are connected to Internet (2), the audio/video streaming signal provision method being **characterized in** comprising steps of:
the user (21) communicating with the service management server (20) through Internet (2);
the service management server (20) generating a sharer set comprising at least the sharer (22, 23, 24) according to an identification data of the user (21);
the user (21) issuing a request to the sharer (22, 23, 24) through the service management server (20); and
the sharer (22, 23, 24) transmitting an audio/video streaming signal to the user (21) through Internet (2) in response to the request.

2. The method according to claim 1, **characterized in that** the user (21) is a first personal computer having user software installed therein, the sharer (22, 23, 24) is a second personal computer having sharer software installed therein, and the second personal computer has a function of retrieving a TV signal and converting the TV signal into the audio/video streaming signal, and **characterized in that** the sharer (22, 23, 24) contained in the sharer set is authorized by steps of:.
creating a dialog frame by the user software, the service management server (20) and the sharer software;
the user (21) issuing a request to the sharer (22, 23, 24) for obtaining authorization via the dialog frame; and
containing the sharer (22, 23, 24) contained in the sharer set with the sharer' approval.

3. The method according to claim 1, **characterized in that** contents and connecting statues contained in the sharer set are shown after the user (21) is communicating with the service management server (20) through Internet (2), and the name of the on-line sharer (22, 23, 24) is highlighted or indicated as bold characters for emphasis.

4. The method according to claim 1, **characterized in that** a transmission path between the user (21) and the sharer (22, 23, 24) is established through Internet (2) connection in response to the request, so that the audio/video streaming signal is transmitted from the sharer (22, 23, 24) to the user (21) along the transmission path.

5. The method according to claim 4, **characterized in that** contents of the audio/video streaming signal shared by the sharer (22, 23, 24) are adjustable by the user (21) with approval of the sharer (22, 23, 24).

6. The method according to claim 4, **characterized in that** if the user (21) issues the request to the sharer (22, 23, 24) through the service management server (20), the service management server (20) notifies the sharer (22, 23, 24) of the user's network address such that the user (21) is deemed as a valid user and the transmission path is established, or otherwise if no request is issued to the sharer (22, 23, 24) through the service management server (20), the user (21) is deemed as an invalid user and the request is rejected.

7. The method according to claim 1, **characterized in that** the advertising information rent or bought by the sponsors is played on the homepage of the service management server (20), or the service management server (20) irregularly transmits updated advertising information to the sharer (22, 23, 24) such that the advertising information rent or bought by the sponsors is packed in the audio/video streaming signal to be inserted or placed on a corner of a display frame.

8. The method according to claim 1, **characterized in that** the user (21) is accessible to login into the service management server (20) if the user (21) has paid management fees.

9. The method according to claim 1, **characterized in that** the method further comprises steps of:
setting up a user account number belonging to a user (21) and a sharer (22, 23, 24);
the service management server (20) accumulating a first duration when the user account number shares programming; and
exchanging the first duration with a second duration such that the user account number is accessible to view programming from other sharers within the second duration by the service management server (20).

10. The method according to claim 1, **characterized in that** contents contained in the sharer set include the account name of the sharer (22, 23, 24), and at least an audio/video server's name, an audio/video source's name or a channel's name is attached to the account name.

11. An audio/video streaming signal sharing system for use with Internet (2), **characterized in** comprising:
a service management server (20) in communication with Internet (2), having a database;
at least a sharer (22, 23, 24) communicated with Internet (2) and the service management server (20) for issuing an audio/video streaming signal; and
at least a user (21) communicated with Internet (2) and connected to the service management server (20) through Internet (2), wherein a sharer set comprising at least the sharer (22, 23, 24) and corresponding to the user (21) is generated according to an identification data of the user (21), the user (21) issues a request to the sharer (22, 23, 24) through the service management server (20), and the sharer (22, 23, 24) transmits the audio/video streaming signal to the user (21) through Internet (2) in response to the request.

12. An audio/video streaming signal provision method for use with a service management server (20), at least a user (21) and multiple sharers, which are connected to Internet (2), the audio/video streaming signal provision method being **characterized in** comprising steps of:
the user (21) communicating with the service management server (20) through Internet (2);
the service management server (20) generating a sharer set comprising the sharers (22, 23, 24) according to an identification data of the user (21), and transmitting the sharer set to the user (21) such that the contents and the connecting statues contained in the sharer set are shown and distinguishable;
the user (21) issuing a request to an on-line sharer (22, 23, 24) contained in the sharer set through the service management server (20); and
the on-line sharer (22, 23, 24) transmitting an audio/video streaming signal to the user (21) through Internet (2) in response to the request.

13. The method according to claim 12, **characterized in that** contents contained in the sharer set include the account name of the sharer (22, 23, 24), and at least an audio/video server's name, an audio/video source's name or a channel's name is attached to the account name.

14. An audio/video streaming signal sharing system for use with Internet (2), **characterized in** comprising:
a service management server (20) communicated with Internet (2), and having a database;
multiple sharers (22, 23, 24) communicated with Internet (2) and the service management server (20) for issuing respective audio/video streaming signals; and
at least a user (21) communicated with Internet (2) and connected to the service management server (20) through Internet (2), wherein a sharer set comprising the sharers (22, 23, 24) and corresponding to the user (21) is generated according to an identification data of the user (21), the sharer set is transmitted to the user (21) such that the contents and the connecting statues contained in the sharer set are shown and distinguishable, the user (21) issues a request to an on-line sharer (22, 23, 24) contained in the sharer set through the service management server (20), and the on-line sharer (22, 23, 24) transmitting the audio/video streaming signal to the user (21) through Internet (2) in response to the request.

15. The method according to claim 14, **characterized in that** contents contained in the sharer set include the account name of the sharer (22, 23, 24), and at least an audio/video server's name, an audio/video source's name or a channel's name is attached to the account name.
